# EUROPEAN PATENT SPECIFICATION

(11) **EP 3 091 641 B1**
(45) Date of publication and mention of the grant of the patent: **04.03.2020**
(21) Application number: 15166213.7
(22) Date of filing: 04.05.2015
(51) Int. Cl.: H02K 15/00, H02K 15/12

(54) **STRAIN-RELIEF ARRANGEMENT FOR AN ELECTRIC CONDUCTOR AND METHOD FOR ESTABLISHING A STRAIN-RELIEF FOR AN ELECTRIC CONDUCTOR**
ZUGENTLASTUNGSANORDNUNG FÜR EINEN ELEKTRISCHEN LEITER UND VERFAHREN ZUR ERZEUGUNG EINER ZUGENTLASTUNG FÜR EINEN ELEKTRISCHEN LEITER
DISPOSITIF DE SOULAGEMENT DE TRACTION POUR UN CONDUCTEUR ÉLECTRIQUE ET PROCÉDÉ PERMETTANT D'ÉTABLIR UNE RÉDUCTION DE TRACTION POUR UN CONDUCTEUR ÉLECTRIQUE

(43) Date of publication of application: 09.11.2016
(73) Proprietor: Tyco Electronics Belgium EC BVBA, 8020 Oostkamp (BE)
(72) Inventor: VAN REYBROUCK, Koen, 8020 Oostkamp (BE); BOVIJN, Pieter, 8560 Wevelgem (BE); OCKET, Tom, 8820 Torhout (BE); MERTENS, Guus, 9230 Massemen (BE)
(74) Representative: Patentanwaltskanzlei WILHELM & BECK

(56) References cited:
- WO-A1-95/15607
- JP-A- H06 178 481
- JP-A- 2011 232 209
- JP-A- 2011 239 529
- US-B2- 7 356 910

## Description

The present invention is directed to a strain-relief arrangement for an electric conductor, particularly a varnished electric wire of a coil, of an electrical, electronic or electro-optic device, particularly a sensor, a detector, for example a resolver, an electric motor, or any applicable electrical, electronic and/or electro-optic appliance etc. Further, the present invention+ is directed to a method for establishing a strain-relief for an electric conductor, particularly a varnished electric wire of a coil, of an electrical, electronic or electro-optic device.

In the field of electrotechnology (electrics, electronics, electrooptics, electrical engineering, power engineering etc.), a large number of electrical devices are known which for example comprise coils to be wound. Such devices are, along with electric motors, for example sensors and detectors, for instance resolvers or position or displacement sensors. A sensor or detector detects events or changes in a quantity and provides a corresponding output, for example as an electrical signal. For example, the resolver is used for measuring degrees of rotation of a rotor of an electric motor.

After winding a coil of an electrical device, for example the resolver (rotation angle detector), a mechanical tension is present in an electrical conductor of the coil. And after welding or soldering the electrical conductor to an electrical contact of the device, the contacts have to be potted or covered by a potting compound. The potting compound further retains the conductor and keeps the tension in the conductor. Additional stress such as a mechanical and/or a thermal load on the conductor may lead to a rupture of the conductor during the use of the device, which in turn often leads to a complete failure of the device.

US 7 356 910 B2 discloses a method for manufacturing a resolver. Firstly, an insulated casing is mounted on a resolver core wherein a plurality of winding slackening pins are disposed at predetermined positions between a plurality of teeth of the resolver and a plurality of terminal pins of the casing projecting out of a surface of the casing. Electric conductors are wound onto the teeth under tension between the teeth and the terminal pins by hooking each conductor lead portion onto a winding hooking pin and a winding slackening pin. After winding the conductors onto the teeth, the winding slackening pins are removed so that the conductor lead portions have a predetermined amount of slack.

JP 2011-239529A discloses a stator structure for a rotation angle detector or a rotation synchronizer and a manufacturing method therefor, comprising a connector unit, an insulation cap etc., which are integrally moulded with the stator structure. The connector unit has connector pins to be electrically connected to a stator winding on a front face side of the stator structure, and a concavity in the back face side of the stator structure. In the concavity a portion of a connection part of the stator to the connector unit is exposed. The portion of the connection part comes into contact with a casting mould for the connector unit when the connector unit is integrally moulded with the stator, thereby stabilizing a position of the casting mould.

It is an object of the present invention to provide an arrangement by means of which it is possible to reduce a mechanical tension of an electrical conductor for example of a coil, particularly before an electric contact will be covered by a potting compound. Furthermore, it is an object of the invention to provide an accordingly structured casing, housing, frame or framework of an electrical, electronic or electro-optic device, particularly a sensor, a detector or an electric motor, and an accordingly structured electrical, electronic or electro-optic device, particularly a sensor, a detector or an electric motor, particularly for the automotive industry.

The object of the invention is solved by means of a strain-relief arrangement for an electric conductor, particularly a varnished electric wire of a coil, of an electrical, electronic or electro-optic device, particularly a sensor, a detector or an electric motor, according to claim 1; and by means of a casing, a housing, a frame or a framework of an electrical, electronic or electro-optic device, particularly a sensor, a detector or an electric motor, according to claim 11; and by means of an electrical, electronic or electro-optic device, particularly a sensor, a detector or an electric motor, for the automotive industry, according to claim : 13.

Further, the object of the invention is solved by a method for establishing a strain-relief for an electric conductor, particularly a varnished electric wire of a coil, of an electrical, electronic or electro-optic device, according to claim 14.
and by a method for producing an electrical, electronic or electro-optic device, particularly a sensor, a detector or an electric motor, according to claim 15. - Advantageous embodiments, additional features and/or advantages of the invention are defined in the dependent claims and in the following description of the invention.

The inventive strain-relief arrangement comprises a casing section of the electrical, electronic or electro-optic device and a moveable winding post at/in the casing section for guiding an electric conductor while laying the conductor or winding the coil, wherein the casing section further comprises a recess into which the winding post is at least partially moveable or retractable after laying the conductor or winding the coil, and wherein a mechanical tension present in the conductor is reduced. During the movement or retraction of the winding post, due to the specific shape of the winding post, the mechanical tension of the conductor is reduced. This is mainly due to the fact that the radial size of the winding post is reduced to its free end in the area where the conductor is wound. The conductor can lose mechanical contact to the winding post, when the winding post is retracted.

In an embodiment of the invention, the casing section comprises a side wall surrounding at least one (electrical) winding contact (terminal) and/or at least one winding post. The side wall may comprise a window or recess for laying the conductor or winding the coil. According to the invention, the winding post and an electrical (winding) contact or terminal are unrelated. Here, the winding contact can be constituted as an electric winding contact (terminal) or vice versa.

Furthermore, in an embodiment of the invention, the casing section comprises a bottom wall into which the recess for the winding post is formed, wherein the recess is preferably shaped as a through-hole in the bottom wall. Furthermore, the casing section may be constituted as an open potting box that is at least partially fillable with a potting compound, wherein the potting box comprises the bottom wall and the side wall. - The invention is applicable to every laying or winding application, preferably where a laying or winding operation/method is followed by a potting operation/method.

In an embodiment of the invention, the winding post is composed of at least a first portion at which the electric conductor is engageable for laying the conductor or winding the coil, and from which the conductor can be disengaged by moving the winding post into the recess after laying the conductor or winding the coil. Further, the winding post mainly is a part with a longitudinal extension and a varying radial size, e.g. a cylinder with a diameter reduction toward its free end. In an embodiment of the invention, the winding post comprises a base portion having a comparatively large radial size and connected thereto the first portion on which the conductor is first wound with a decreased radial size from its connecting area to the base portion. Furthermore, in an embodiment of the invention, the winding post further comprises a top portion connected to the first portion opposite to the base portion, wherein the top portion has a comparatively small diameter compared to the first portion. - The base portion, i. e. the winding post, can comprise a prolongation or a lead-in chamfer for insertion of the base portion into the recess.

A wrap angle of the conductor around the winding post may vary greatly. In an embodiment of the invention, in a winding position of the winding post, the winding post is provided outside of the recess, and in a strain relief position of the winding post, at least a section of the winding post is provided in the recess. Furthermore, in an embodiment of the invention, in the winding position the winding post is formed in one piece, in one material piece or integrally with the casing section. Furthermore, in the strain relief position the winding post and the casing section can be provided separately from each other, wherein the winding post is received in the recess of the casing section.

In an embodiment of the invention, in the winding position, the winding post is joined to the casing section, particularly to the bottom wall of the casing section, preferably via at least one film connection that breaks up when the winding post is brought from the winding position to the strain relief position. In an embodiment of the invention, two, preferably three or more film connections are formed between the casing section and the winding post. The film connections can be arranged in such a manner that the film connections keep the winding post in an upright position also during laying the conductor or winding the coil of the electrical, electronic or electro-optic device.

In an embodiment of the invention, in the strain relief position of the winding post, a section of the winding post, particularly at least a section of the base portion, is accommodated in the recess of the casing section in a form-fit manner. Moreover, in the strain relief position, a section of the winding post, particularly at least a section of the base portion, can fit into the recess of the casing section in a sealing manner, wherein the winding post, particularly the base portion, is preferably oversized against the recess. I. e. an outer diameter (for example of a circle) of the winding post, particularly of the base portion, is oversized against an inner diameter (for example of a circle) of the recess. Here, while plugging the winding post into the recess, the recess is expanded whereas the winding post is compressed, thereby creating a tight, for example a watertight, connection of the winding post and the casing section in the recess.

In an embodiment of the invention, the winding post is essentially linearly moveable or retractable into the recess. Here, the winding post can be pressed down into the recess. - In an embodiment of the invention, the winding post, the base portion or a section of the base portion are in line with a longitudinal extension of the recess of the casing section, wherein the winding post, the base portion or the section of the base portion may be translational moveable or retractable into the recess. - In an example, the base portion is shaped as a cylinder having a comparatively large diameter. The first portion can be shaped as a truncated cone and the top portion can be shaped as a cylinder having a comparatively small diameter. - In an example, the strain-relief arrangement comprises three winding contacts and two or three winding posts. Another quantity of winding contacts and/or winding posts is of course applicable.

The inventive casing, the inventive housing, the inventive frame or the inventive framework of an electrical, electronic or electro-optic device comprises an inventive strain-relief arrangement. - The inventive electrical, electronic or electro-optic device comprises an inventive strain-relief arrangement and/or an inventive casing, an inventive housing, an inventive frame or an inventive framework. Here, a potting compound, preferably a plastic or resin, preferably covers the strain-relief arrangement or a part or a portion of the strain-relief arrangement.

For the inventive method for establishing a strain-relief for an electric conductor, the conductor is at least partially wound around or has at least been partially wound around a moveable winding post of a casing section of the electrical, electronic or electro-optic device. The winding post is later retracted into a recess in the casing section, thereby reducing a mechanical tension in the conductor. The casing section is then preferably be at least partially coverable with a potting compound.

The inventive method for producing an electrical, electronic or electro-optic device comprises the steps of laying the conductor or winding a coil with the conductor for the electrical, electronic or electro-optic device and establishing an inventive strain-relief for the conductor. In an example, an insulated casing is at first mountable onto a core of the electrical, electronic or electro-optic device and afterwards the conductor can be laid or the coil can be wound. - In an example, during an inventive method, the winding post is partially retractable into the recess, wherein the winding post can be brought from a winding position to a strain relief position. According to the invention, the casing section comprises a strain-relief arrangement for the conductor, which may be formed as an inventive strain-relief arrangement.

The invention describes a design of a plastic feature that can easily be incorporated into an open-close moulding process, wherein the plastic feature can further easily be handled. - For example, the inventive strain-relief arrangement or the inventive casing section and the inventive plastic feature are integrated into the same plastic part ((insulated) casing, housing, frame, framework etc.). The plastic material is preferably a polyamide, for example a PA 6- or a PA 66-variant; any sufficiently stiff plastic material is of course applicable for the plastic feature.

An open-close moulding process is the simplest injection moulding process where the shape of a plastic part is fully produced inside two mould halves, one mould half being stationary and the other one being moveable. This limits the features that can be designed as they may only be formed in one direction. It is possible to produce a feature that is formed in another direction but then at least one slider is required in a mould which affects reliability and costs to a large extent. For this reason, it is always favourable to apply a simple, reliable and cost-efficient open-close moulding process.

In the following, the present invention is explained in more detail in conjunction with embodiment examples of two embodiments of a variant with reference to the accompanying drawing which is not drawn to scale. Elements, parts or components having an identical, univocal or analogous configuration and/or function have the same reference numerals in the description of the drawing, the reference list and the patent claims and/or are indicated by means of the same reference numerals in the drawing. Possible alternatives which are not explained in the description, which are not depicted in the drawing and/or which are not conclusively described, static and/or kinematic inversions, combinations etc. for the depicted embodiments and/or described embodiment examples of the invention, or of assemblies, parts or sections thereof can be found in the reference list.

All described features, even those of the reference list, may not only be used in the indicated combination or in the indicated combinations, but also in a different combination or in different combinations, as well as in an isolated condition. By means of the reference numerals and the features assigned to them in the description of the invention, the description of the drawing and/or in the reference list, it is particularly possible to substitute a feature or a plurality of features in the description of the invention and/or in the description of the drawing. Furthermore, a feature or a plurality of features in the patent claims may thereby be interpreted, specified in more detail and/or replaced. - In the figures (fig.) of the drawing:
- Fig. 1: shows a two-dimensional, sectional side view of an inventive strain-relief arrangement of an electrical, electronic or electro-optic device according to a first embodiment of the invention, which is broken off at three sides (both lateral sides and lower side);
- Fig. 2: shows a two-dimensional, sectional side view of an inventive winding post according to a second embodiment of the invention, in a winding position for winding a coil of a sensor or detector, which is broken off at three sides (again both lateral sides and lower side);
- Fig. 3: shows a similar view to fig. 2 of the drawing, wherein the winding post of an inventive strain-relief arrangement according to the second embodiment is brought form a winding position above a recess into a strain relief position in the recess in which the winding post is partially sunk into the recess; and
- Fig. 4: shows a perspective view of an inventive strain-relief arrangement according to a third embodiment of the invention, which is broken off at three sides (both lateral sides and inner side), wherein a winding post comprises a different connection to a bottom wall of the strain-relief arrangement.

The present invention - a strain-relief arrangement 20 for an electric conductor 30 and a method for establishing a strain-relief for such a conductor 30 - will in the following be described in more detail in conjunction with three embodiments of a variant of an electrical, electronic and/or electro-optic device 1, for example a sensor 1 or a detector 1, like a resolver 1. However, the invention is not limited to such a variant, but is of a more fundamental nature so that it is, within the meaning of the invention, applicable to all electrical, electronic and/or electro-optic appliances, for example to an electric motor. - Although the invention is illustrated and described in detail by means of preferred embodiment examples, the invention is not limited to the such-disclosed examples. Other variations may be derived therefrom without exceeding the protective scope of the invention.

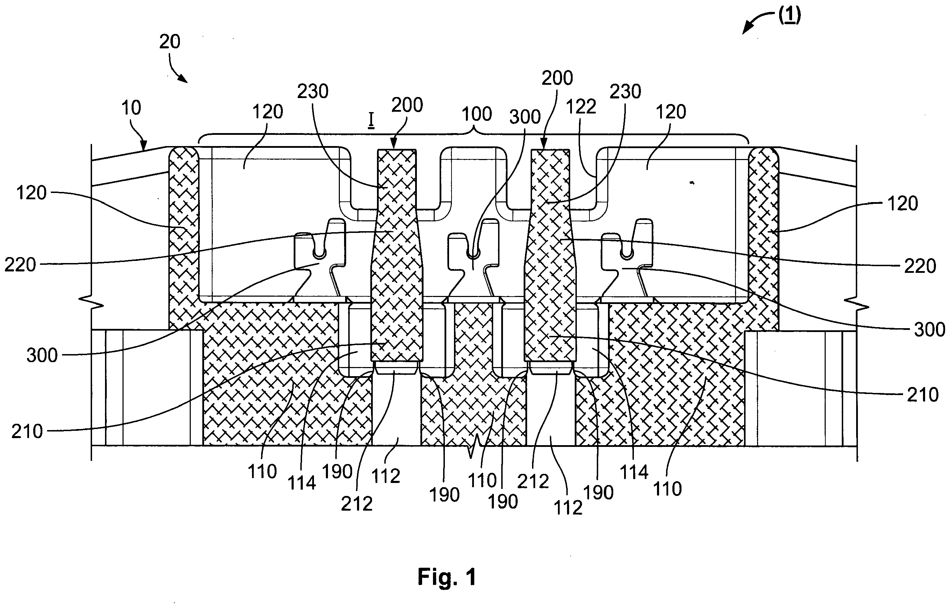

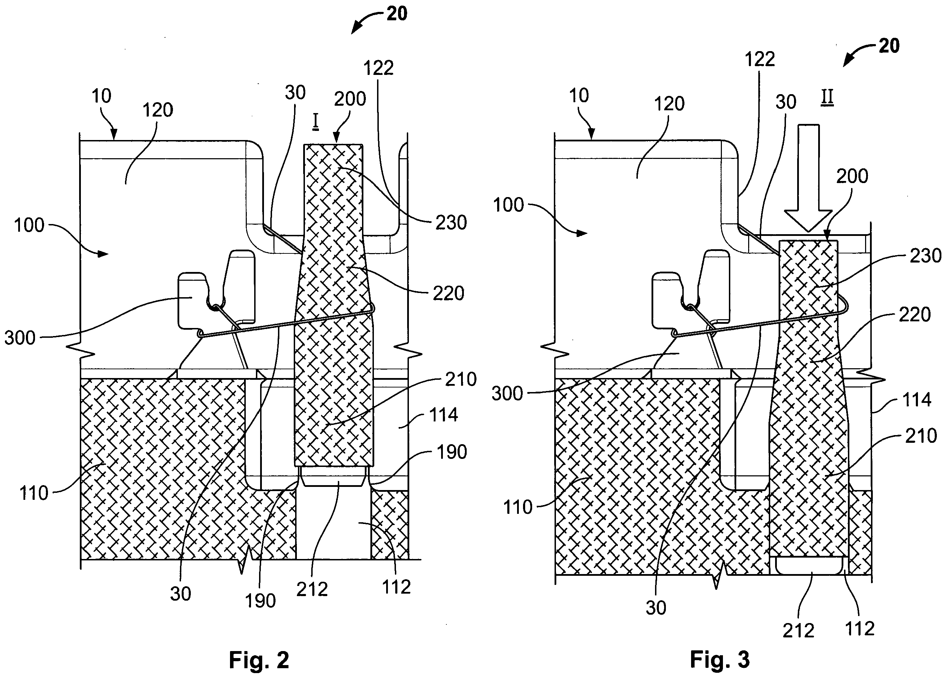

Fig. 1 (cf. also fig. 2 and 3) shows a portion of an insulated casing 10, like a housing, a frame, a framework etc. comprising a casing section 100 which is part of the inventive strain-relief arrangement 20 of the device 1. Here, the casing section 100 may be constructed like a potting box, which is accessible from, e. g. open at, one side for introducing a potting compound into the casing section 100 for potting, sealing, encapsulating etc. the interior of the casing section 100. The casing section 100 may comprise a bottom wall 110 and at least one side wall 120 which surrounds the interior of the strain-relief arrangement 20, wherein the side wall 110 on the bottom wall 110 constitutes a tray. The side wall 120 may comprise a winding window 122 or a recess for winding a coil of the device 1.

The interior of the strain-relief arrangement 20 comprises at least one winding contact 300 and at least one winding post 200 or winding pin. Fig. 1 shows three winding contacts 300 and two winding posts 200, a different number of winding contacts 300 and/or winding posts 200 is/are of course applicable. - A winding contact 300 may be a mechanical and/or an electric winding contact 300, wherein a mechanical and electric winding contact 300 is preferred. At/on the winding contact 300, the conductor 30, preferably a varnished electric wire may be mechanically fixed and/or electrically contacted.

Prior to or after laying the conductor 30, preferably winding a coil with the conductor 30, the conductor 30 is preferably partially wound around the respective winding post 200 (cf. Fig. 2), wherein the conductor 30 may lead through the winding window 122. Here, the conductor 30 around and aside (on the off-side) of the winding contact 300 is tensile-loaded. Additional stress (tensile stress) at a later point in time (for example in a potted state of the winding contact 300 and the conductor 30) may lead to a rupture of the conductor 30 during the use of the device 1. - According to the invention, the initial tensile loading of the conductor 30 is reduced so that an additional stress will not appear or would not have the effect of the rupture of the conductor 30.

For this reason, according to the invention the winding post 200 is at least formed in a moveable, retractable, collapsible manner etc., wherein the winding post 200 or a portion or section of the winding post 200 may be plunged, inserted, plugged etc. into a recess 112 in the bottom wall 110 of the casing section 100. Preferably the recess 112 is formed as a through-hole in the bottom wall 110 for receiving the winding post 200 or said portion or section thereof. Particularly, to form the recess 112 as a through-hole(together with a design and an interconnection of the winding post 200 to the bottom wall 110) guarantees the application of the simple and reliable open-close moulding process for the casing 10.

An inventive winding post 200 is provided above the respective recess 112, wherein the winding post 200 is preferably formed in one piece, in one material piece or integrally with the bottom wall 110. For this reason, the winding post 200 may be connected with the bottom wall 110 by at least one, preferably a plurality, particularly three, film connections 190, between the bottom wall 110 and the winding post 200, wherein each film connection 190 is preferably integrally formed on one side with the bottom wall 110 and integrally formed on the other side with the winding post 200. The film of the film connections 190 is a thin breakable material bridge. It is of course possible to not integrally connect the winding post 200 with the bottom wall 110.

For releasing or reducing the tensile load of the conductor 30, the winding post 200 is at least partially formed as a truncated cone. It is possible to essentially shape the winding post 200 as such a truncated cone, wherein a base portion 210 (see below) may be applied. - Preferably the winding post 200 comprises at least two portions a base portion 210 and a first portion 220. The base portion 210 of the winding post 200 has a comparatively large, preferably constant diameter, wherein the first portion 220 of the winding post 200 has a decreasing diameter from its connecting area to the base portion 210 to its other end, so is shaped conical.

The particularly integrally formed winding post 200 may further comprise a top portion 230 with a comparatively small, preferably constant diameter. The top portion 230 extends from the first portion 220 at an opposite side to the base portion 210 of the winding post 200. The base portion 210 or the top portion 230 is preferably shaped as a (solid) cylinder or are preferably shaped as (solid) cylinders. Other forms of the base portion 210, the top portion 230 and/or even the first portion 220 are applicable. - The base portion 210 may comprise a prolongation, a lead-in chamfer 212 or an inclined insertion surface for insertion of the base portion 210 into the recess 112 in the bottom wall 110 of the casing section 100. The winding post 200 may be moveable or retractable or even collapsible.

In the shown embodiments, only the base portion 210, i. e. a section of the base portion 210 is retractable into the recess 112 (cf. fig. 3). It is possible that the whole base portion 210 or even more than all of the base portion 210 may be retracted into the recess 112. Here, the recess 112 and the base portion 210 have the same cross-sectional shapes, wherein the cross-sectional shapes being constituted in a complementary manner. I. e. the cross-sectional form of the base portion 210 is designed as a positive and the cross-sectional form of the recess 112 is designed as a negative. According to the invention, a form-fit or form-locking interconnection of the recess 112 and the base portion 210 may be established.

Preferably a cross-sectional area of the base portion 210 is oversized against a cross-sectional area of the recess 112 so that a press-fit or an interference-fit between the base portion 210 and the recess 112 may be established. An interference-fit prevents the winding post 200 from plugging or falling through the recess 112 before the strain-relief arrangement 20 may be covered with the potting compound. Later on, the potting compound further locks the winding post 200 into the recess 112. - Preferable complementary cross-sectional forms are circles, however, other cross-sectional forms such as polygons, in particular regular polygons, ellipses, ovals or complementary combined cross sections are of course applicable.

Furthermore, the press-fit or the interference-fit between the base portion 210 and the recess 112 close the recess 112 in such a way that a sealed, for example a watertight, tray or cavity (casing section 100) is created. The sealed casing section 100 is required for potting the strain-relief arrangement 20 so that no hot and liquid potting compound may flow between an outer diameter of the base portion 210 and an inner diameter of the recess 112 into the device 1.

Figs. 2 and 3 show the application of the invention to a sensor 1 or a detector 1 which may for example be constructed as a resolver 1. Here, fig. 2 shows the winding post 200 of the inventive strain-relief arrangement 20 in a winding I or extended position I (cf. also fig. 1), whereas fig. 3 shows the winding post 200 of the inventive strain-relief arrangement 20 in a strain relief II, potting II, retracted II or plugged-in position II. - As can be seen from fig. 2, in the winding position I of the winding post 200 the conductor 30 engages at or tightly abuts against the winding post 200, i. e. its first portion 220, wherein a tensile load is present in the conductor 30.

In order to reduce this tensile load, the winding post 200 is retracted into the recess 112 by pushing down the winding post 200, cf. the strain relief position II of the winding post 200 in fig. 3 (arrow). Hereby, the conductor 30 to a large extent loses its engagement with or abutment against the winding post 200, i. e. its first portion 220. Here, the diameter of the winding post 200 where the conductor 30 is wound around is lowered because of the varying diameter of the first section 220. The tensile load in the conductor 30 is reduced, which also leads to a slackening of the conductor 30. Now the strain-relief arrangement 20 may be covered with the potting compound that locks the conductor 30 and the winding post 200 in their positions. Additional loads on the conductor 30 are now unproblematic because the conductor 30 is essentially free from initial intrinsic tensile loads.

When retracting the winding post 200 into the recess 112, the film connections 190 between the base portion 210 of the winding post 200 and the bottom wall 110 of the casing section 100 break up, i. e. the film connections 190 are also constituted as predetermined breaking points. When the winding post 200 is brought from the winding position I into the strain relief position II, the preferably integral connections between the winding post 200 and the bottom wall 110 via the film connections 190 becomes obsolete, i. e. the winding post 200 and the bottom wall 110 (the casing section 100 or casing 10) become two parts. The winding post 200 may now be pushed farther into the recess 112, wherein the prolongation or the lead-in chamfer 212 etc. may guide the base portion 210 into and/or in the recess 112.

As can be seen from the fig. 1 and 2, the winding post 200 in the winding position I is lowered down with respect to the winding contact 300. I. e. (with reference to the drawing) an underside of the winding post 200 has a lower arrangement than an underside of the winding contact 300 or terminal. Preferably, the winding post 200 is held in a cavity 114 which is arranged in the bottom wall 110 of the casing section 100, i. e. the base portion 210 of the winding post 200 is in contact with the bottom side of the cavity 114. By means of such an arrangement, the base portion 210 may be elongated which in turn facilitates provision of the winding post 200 in the recess 112. Here, the cavity 114 is of course part of the casing section 100 and the strain-relief arrangement 20.

During winding a coil onto the conductor 30, the winding post 200 may further act as a resilient winding post 200. - Furthermore, the invention is also applicable to electrical, electronic and/or electro-optic devices 1 (sensors 1, detectors 1, electric motors etc.) which do not comprise coils, i. e. the conductor 30 of the device 1 must not be wound onto a coil, it may also just be laid, installed, run etc., wherein the conductor 30 is at least partially wound around the winding post 200. Further, it is not necessary to constitute the casing section 100 as an open potting box that may at least partially be filled up by a potting compound. The method of potting may be omitted so that the conductor 30 lies at the winding post 200 with nearly no tensile-stress, or the conductor 30 is spaced apart from the winding post 200.

For blocking or locking the base portion 210 or the winding post 200 in the recess 112, the recess 112 may comprise a narrowing diameter in the direction of insertion of the winding post 200 into the recess 112. Further, at an inner wall of the recess 112 a projection is applicable which stops the base portion 210 during insertion into the recess 112. The projection may extend into the recess 112 in circumferential direction. Here, it should be ensured that a demoulding of the casing 10 is still possible; i. e. that possible undercuts are small enough so that the casing 10 may still be removed from the mould without damaging the casing 10 which is warm and still comprises a limited flexibility.

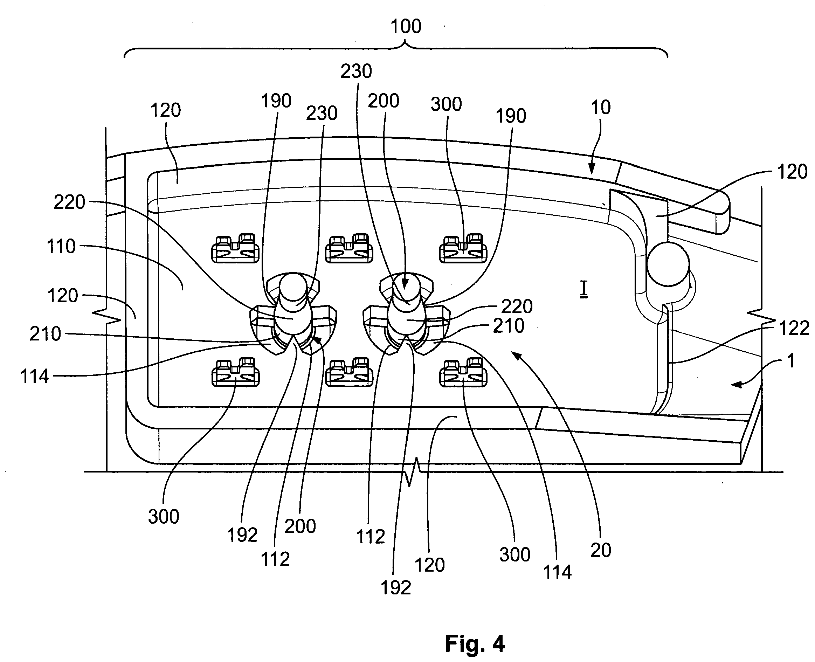

Fig. 4 shows a different film connection 190 between the casing section 100 and winding posts 200. Here, the film connections 190 are formed between a side wall of the cavity 114 and the base portion 210 of the respective winding post 200. Again, the film connections 190 function as predetermined breaking points or breaking pieces, wherein the effective place of fracture lies near or directly at the winding post 200. Each film connection 190 is preferably integrally formed on one side with a rod 192 which in turn is preferably integrally formed with the side wall of the cavity 114, and is preferably integrally formed on the other side with the winding post 200. - For a single winding post 200, at least one film connection 190 according to fig. 1-3 and at least one film connection 190 according to fig. 4 may of course be combined.

A single rod 192 preferably comprises a higher material accumulation directly at the side of the cavity 144 than directly at the side of the film connection 190, the base portion 210 or the winding post 200. I. e. an integral connection of the film connection 190 to the winding post 200 is weaker than an integral connection of the rod 192 to the side wall of the cavity 144. Thus, the film connection 190 will break up at the winding post 200 and not at the rod 192 at an inner wall of the cavity 144. Preferably a rod 192 has a triangular cross section when viewed from above. Further, the rod 192 may be formed with a tapered longitudinal end portion at the side of film connection 190 or the winding post 200. - Such film connections 190 may also be applied between a winding post 200 and the bottom wall 100 of the casing section 100 near the recess 112, wherein the bottom wall 100 takes over the function of the inner wall of the cavity 144.

### List of reference numerals

- 1: electrical, electronic and/or electro-optic device

- 10: casing
- 20: strain-relief arrangement
- 30: electric conductor

- 100: casing section
- 110: bottom wall
- 112: recess
- 114: cavity
- 120: side wall
- 122: winding window
- 190: film connection
- 192: rod

- 200: winding post
- 210: base portion of the winding post 200
- 212: lead-in chamfer
- 220: first portion of the winding post 200
- 230: top portion of the winding post 200
- 300: winding contact

- I: winding position of the winding post 200, extended position
- II: strain relief position of the winding post 200, retracted/plugged-in position

## Claims

1. Strain-relief arrangement (20) for an electric conductor (30), particularly a varnished electric wire (30) of a coil, of an electrical, electronic or electro-optic device (1), particularly a sensor (1), a detector (1) or an electric motor (1), comprising
a casing section (100) of the electrical, electronic or electro-optic device (1) and a moveable winding post (200) at the casing section (100) for guiding the conductor (30) while winding the coil, **characterised in that**
the casing section (100) further comprises a recess (112) into which the winding post (200) is at least partially movable after winding the coil.

2. Strain-relief arrangement (20) according to the preceding claim, **characterised in that** the casing section (100) comprises a side wall (120) surrounding at least one winding contact (300) and/or at least one winding post (200), and
the casing section (100) comprises a bottom wall (110) into which the recess (112) is formed, wherein the recess (112) is preferably shaped as a through-hole in the bottom wall (110).

3. Strain-relief arrangement (20) according to the preceding claim, **characterised in that** the casing section (100) is constituted as an open potting box that is at least partially fillable by a potting compound, wherein the casing section comprises the bottom wall (110) and the side wall (120).

4. Strain-relief arrangement (20) according to one of the preceding claims, **characterised in that** the winding post (200) is composed of at least a first portion (220) at which the electric conductor (30) is engageable for winding the coil, and a further portion with a reduced radial size.

5. Strain-relief arrangement (20) according to one of the preceding claims, **characterised in that** the winding post (200) comprises a base portion (210) having a comparatively large radial dimension and connected thereto the first portion (220) with a decreasing radial dimension from its connecting area to the base portion (210), wherein
the winding post (200) may further comprise a top portion (230) connected to the first portion (220) opposite to the base portion (210), wherein the top portion (230) has a comparatively small radial dimension from its connecting area to the first portion (220).

6. Strain-relief arrangement (20) according to one of the preceding claims, **characterised in that** in a winding position (I) of the winding post (200) the winding post (200) is provided outside of the recess (112), and in a strain relief position (II) of the winding post (200) at least a section of the winding post (200) is provided in the recess (112).

7. Strain-relief arrangement (20) according to the preceding claim, **characterised in that** in the winding position (I) the winding post (200) is formed in one piece, in one material piece or integrally with the casing section (100), and in the strain relief position (II) the winding post (200) and the casing section (100) are provided separately from each other, wherein the winding post (200) is received in the recess (112) of the casing section (100).

8. Strain-relief arrangement (20) according to one of the preceding claims, **characterised in that** in the winding position (I) the winding post (200) is joined to the casing section (100), particularly to the bottom wall (110) of the casing section (100), preferably via at least one film connection (190) which breaks up when the winding post (200) is brought from the winding position (I) into the strain relief position (II).

9. Strain-relief arrangement (20) according to one of the preceding claims, **characterised in that** two, preferably three or more film connections (190) are formed between the casing section (100) and the winding post (200), and
the film connections (190) are arranged in such a manner that the film connections (190) keep the winding post (200) in an upright position also during winding the coil of the electrical, electronic or electro-optic device (1).

10. Strain-relief arrangement (20) according to one of the preceding claims, **characterised in that** in the strain relief position (II) of the winding post (200) a section of the winding post (200), particularly at least a section of the base portion (210), is accommodated in the recess (112) of the casing section (100) in a form-fit manner.

11. Strain-relief arrangement (20) according to one of the preceding claims, **characterised in that** in the strain relief position (II) of the winding post (200), a section of the winding post (200), particularly at least a section of the base portion (210), fits into the recess (112) of the casing section (100) in a sealing manner, wherein the winding post (200), particularly the base portion (210), is preferably oversized against the recess (112).

12. Strain-relief arrangement (20) according to one of the preceding claims, **characterised in that** the winding post (200), the base portion (210) or a section of the base portion (210) is in line with a longitudinal extension of the recess (112) of the casing section (100), wherein the winding post (200), the base portion (210) or the section of the base portion (210) is translational retractable into the recess (112) .

13. Casing (10), housing (10), frame (10) or framework (10) of an electrical, electronic or electro-optic device (1), particularly a sensor (1), a detector (1) or an electric motor (1), **characterised in that**
the casing (10), the housing (10), the frame (10) or the framework (10) comprises a strain-relief arrangement (20) according to one of the preceding claims.

14. Method for establishing a strain-relief for an electric conductor (30), particularly a varnished electric wire (30) of a coil, of an electrical, electronic or electro-optic device (1), wherein
the conductor (30) is at least partially wound around a moveable winding post (200) of a casing section (100) of the electrical, electronic or electro-optic device (1), **characterised in that**
the winding post (200) is later retracted into a recess (112) in the casing section (100), thereby reducing a mechanical tension in the conductor (30), and subsequently the casing section (100) is at least partially covered with a potting compound.

15. Method for producing an electrical, electronic or electro-optic device (1), particularly a sensor (1), a detector (1) or an electric motor (1), **characterised in that**
the method comprises the steps of winding a coil of the electrical, electronic or electro-optic device (1) with an electric conductor (30), and establishing a strain-relief for the conductor (30) according to the preceding claim.

## Patentansprüche

1. Zugentlastungsanordnung (20) für einen elektrischen Leiter (30), insbesondere einen Lackdraht (30) einer Spule, einer elektrischen, elektronischen oder elektrooptischen Einrichtung (1), insbesondere eines Sensors (1), einer Erfassungseinrichtung (1) oder eines Elektromotors (1), umfassend
ein Verschalungsteilstück (100) der elektrischen, elektronischen oder elektrooptischen Einrichtung (1) und einen beweglichen Wicklungsstift (200) an dem Verschalungsteilstück (100) zum Führen des Leiters (30) während eines Wickelns der Spule, **dadurch gekennzeichnet, dass**
das Verschalungsteilstück (100) ferner eine Ausnehmung (112) umfasst, in die der Wicklungsstift (200) nach dem Wickeln der Spule zumindest teilweise bewegbar ist.

2. Zugentlastungsanordnung (20) nach dem vorhergehenden Anspruch, **dadurch gekennzeichnet, dass** das Verschalungsteilstück (100) eine Seitenwand (120) umfasst, die wenigstens einen Wicklungskontakt (300) und/oder wenigstens einen Wicklungsstift (200) umgibt, und
das Verschalungsteilstück (100) eine Bodenwand (110) umfasst, in der die Ausnehmung (112) gebildet ist, wobei die Ausnehmung (112) bevorzugt die Form einer Durchgangsöffnung in der Bodenwand (110) aufweist.

3. Zugentlastungsanordnung (20) nach dem vorhergehenden Anspruch, **dadurch gekennzeichnet, dass** das Verschalungsteilstück (100) als offenes Vergussbehältnis ausgebildet ist, das zumindest teilweise mit einer Vergussmasse füllbar ist, wobei das Verschalungsteilstück die Bodenwand (110) und die Seitenwand (120) umfasst.

4. Zugentlastungsanordnung (20) nach einem der vorhergehenden Ansprüche, **dadurch gekennzeichnet, dass** sich der Wicklungsstift (200) aus zumindest einem ersten Abschnitt (220), an dem der elektrische Leiter (30) zum Wickeln der Spule in Eingriff bringbar ist, und einem weiteren Abschnitt mit einer verringerten radialen Größe zusammensetzt.

5. Zugentlastungsanordnung (20) nach einem der vorhergehenden Ansprüche, **dadurch gekennzeichnet, dass** der Wicklungsstift (200) einen Basisabschnitt (210) mit einer vergleichsweise großen radialen Abmessung und mit diesem verbunden den ersten Abschnitt (220) mit einer ausgehend von seinem Verbindungsbereich mit dem Basisabschnitt (210) abnehmenden radialen Abmessung umfasst, wobei
der Wicklungsstift (200) ferner einen dem Basisabschnitt (210) gegenüberliegend mit dem ersten Abschnitt (220) verbundenen Kopfabschnitt (230) umfassen kann, wobei der Kopfabschnitt (230) ausgehend von seinem Verbindungsbereich mit dem ersten Abschnitt (220) eine vergleichsweise kleine radiale Abmessung aufweist.

6. Zugentlastungsanordnung (20) nach einem der vorhergehenden Ansprüche, **dadurch gekennzeichnet, dass** in einer Wicklungsposition (I) des Wicklungsstifts (200) der Wicklungsstift (200) außerhalb der Ausnehmung (112) vorgesehen ist und in einer Zugentlastungsposition (II) des Wicklungsstifts (200) zumindest ein Teilstück des Wicklungsstifts (200) in der Ausnehmung (112) vorgesehen ist.

7. Zugentlastungsanordnung (20) nach dem vorhergehenden Anspruch, **dadurch gekennzeichnet, dass** in der Wicklungsposition (I) der Wicklungsstift (200) in einem Stück, in einem Materialstück oder integral mit dem Verschalungsteilstück (100) gebildet ist und in der Zugentlastungsposition (II) der Wicklungsstift (200) und das Verschalungsteilstück (100) separat voneinander vorgesehen sind, wobei der Wicklungsstift (200) in der Ausnehmung (112) des Verschalungsteilstücks (100) aufgenommen ist.

8. Zugentlastungsanordnung (20) nach einem der vorhergehenden Ansprüche, **dadurch gekennzeichnet, dass** in der Wicklungsposition (I) der Wicklungsstift (200) an das Verschalungsteilstück (100) angefügt ist, insbesondere an die Bodenwand (110) des Verschalungsteilstücks (100), bevorzugt über wenigstens eine Filmverbindung (190), die aufbricht, wenn der Wicklungsstift (200) von der Wicklungsposition (I) in die Zugentlastungsposition (II) gebracht wird.

9. Zugentlastungsanordnung (20) nach einem der vorhergehenden Ansprüche, **dadurch gekennzeichnet, dass** zwischen dem Verschalungsteilstück (100) und dem Wicklungsstift (200) zwei, bevorzugt drei oder mehr Filmverbindungen (190) gebildet sind, und
die Filmverbindungen (190) in solcher Weise angeordnet sind, dass die Filmverbindungen (190) den Wicklungsstift (200) auch während eines Wickelns der Spule der elektrischen, elektronischen oder elektrooptischen Einrichtung (1) in einer aufrechten Position halten.

10. Zugentlastungsanordnung (20) nach einem der vorhergehenden Ansprüche, **dadurch gekennzeichnet, dass** in der Zugentlastungsposition (II) des Wicklungsstifts (200) ein Teilstück des Wicklungsstifts (200), insbesondere zumindest ein Teilstück des Basisabschnitts (210), in der Ausnehmung (112) des Verschalungsteilstücks (100) formschlüssig aufgenommen ist.

11. Zugentlastungsanordnung (20) nach einem der vorhergehenden Ansprüche, **dadurch gekennzeichnet, dass** in der Zugentlastungsposition (II) des Wicklungsstifts (200) ein Teilstück des Wicklungsstifts (200), insbesondere zumindest ein Teilstück des Basisabschnitts (210), abdichtend in der Ausnehmung (112) des Verschalungsteilstücks (100) sitzt, wobei der Wicklungsstift (200), insbesondere der Basisabschnitt (210), bevorzugt gegenüber der Ausnehmung (112) ein Übermaß aufweist.

12. Zugentlastungsanordnung (20) nach einem der vorhergehenden Ansprüche, **dadurch gekennzeichnet, dass** der Wicklungsstift (200), der Basisabschnitt (210) oder ein Teilstück des Basisabschnitts (210) mit einer Längserstreckung der Ausnehmung (112) des Verschalungsteilstücks (100) ausgerichtet ist, wobei der Wicklungsstift (200), der Basisabschnitt (210) oder das Teilstück des Basisabschnitts (210) translatorisch in die Ausnehmung (112) einfahrbar ist.

13. Verschalung (10), Gehäuse (10), Rahmen (10) oder Gestell (10) einer elektrischen, elektronischen oder elektrooptischen Einrichtung (1),
insbesondere eines Sensors (1), einer Erfassungseinrichtung (1) oder eines Elektromotors (1), **dadurch gekennzeichnet, dass**
die Verschalung (10), das Gehäuse (10), der Rahmen (10) oder das Gestell (10) eine Zugentlastungsanordnung (20) nach einem der vorhergehenden Ansprüche umfasst.

14. Verfahren zum Einrichten einer Zugentlastung für einen elektrischen Leiter (30), insbesondere einen Lackdraht (30) einer Spule, einer elektrischen, elektronischen oder elektrooptischen Einrichtung (1), wobei
der Leiter (30) zumindest teilweise um einen beweglichen Wicklungsstift (200) eines Verschalungsteilstücks (100) der elektrischen, elektronischen oder elektrooptischen Einrichtung (1) gewickelt wird, **dadurch gekennzeichnet, dass**
der Wicklungsstift (200) später in eine Ausnehmung (112) in dem Verschalungsteilstück (100) eingefahren wird, wodurch eine mechanische Spannung in dem Leiter (30) verringert wird, und anschließend das Verschalungsteilstück (100) zumindest teilweise mit einer Vergussmasse bedeckt wird.

15. Verfahren zum Herstellen einer elektrischen, elektronischen oder elektrooptischen Einrichtung (1), insbesondere eines Sensors (1), einer Erfassungseinrichtung (1) oder eines Elektromotors (1),
**dadurch gekennzeichnet, dass**
das Verfahren die Schritte eines Wickelns einer Spule der elektrischen, elektronischen oder elektrooptischen Einrichtung (1) mit einem elektrischen Leiter (30) und eines Einrichtens einer Zugentlastung für den Leiter (30) nach den vorhergehenden Ansprüchen umfasst.

## Revendications

1. Agencement de soulagement de traction (20) pour un conducteur électrique (30), en particulier un fil électrique verni (30) d'une bobine, d'un dispositif électrique, électronique ou électro-optique (1), en particulier un capteur (1), un détecteur (1) ou un moteur électrique (1), comprenant:
une section d'enceinte (100) du dispositif électrique, électronique ou électro-optique (1) et une tige d'enroulement mobile (200) au niveau de/dans la section d'enceinte (100) pour guider le conducteur (30) tout en enroulant la bobine,
**caractérisé en ce que** la section d'enceinte (100) comporte en outre un évidement (112) dans lequel la tige d'enroulement (200) est au moins partiellement déplaçable après l'enroulement de la bobine.

2. Agencement de soulagement de traction (20) selon la revendication précédente, **caractérisé en ce que** la section d'enceinte (100) comprend une paroi latérale (120) qui entoure au moins un contact d'enroulement (300) et/ou au moins une tige d'enroulement (200); et
la section d'enceinte (100) comprend une paroi inférieure (110) dans laquelle l'évidement (112) est formé, dans lequel l'évidement (112) est de préférence configuré comme un trou traversant dans la paroi inférieure (110).

3. Agencement de soulagement de traction (20) selon la revendication précédente, **caractérisé en ce que** la section d'enceinte (100) est constituée comme une boîte d'enrobage ouverte qui peut être au moins partiellement remplie avec un composé d'enrobage, dans lequel la section d'enceinte comprend la paroi inférieure (110) et la paroi latérale (120).

4. Agencement de soulagement de traction (20) selon l'une des revendications précédentes, **caractérisé en ce que** la tige d'enroulement (200) est composée d'au moins une première partie (220) au niveau de laquelle le conducteur électrique (30) peut être engagé pour enrouler la bobine, et d'une partie supplémentaire qui présente une taille radiale réduite.

5. Agencement de soulagement de traction (20) selon l'une des revendications précédentes, **caractérisé en ce que** la tige d'enroulement (200) comprend une partie de base (210) qui présente une dimension radiale comparativement grande et qui est connectée à celle-ci, la première partie (220) présentant une dimension radiale décroissante depuis sa région de connexion jusqu'à la partie de base (210),
dans lequel la tige d'enroulement (200) peut comprendre en outre une partie supérieure (230) qui est connectée à la première partie (220) opposée à la partie de base (210), dans lequel la partie supérieure (230) présente une dimension radiale comparativement petite à depuis sa région de connexion jusqu'à la première partie (220) .

6. Agencement de soulagement de traction (20) selon l'une des revendications précédentes, **caractérisé en ce que**, dans une position d'enroulement (I) de la tige d'enroulement (200), la tige d'enroulement (200) est située à l'extérieur de l'évidement (112) et, dans une position de soulagement de traction (II) de la tige d'enroulement (200), au moins une section de la tige d'enroulement (200) est située dans l'évidement (112).

7. Agencement de soulagement de traction (20) selon la revendication précédente, **caractérisé en ce que**, dans la position d'enroulement (I), la tige d'enroulement (200) est formée d'une seule pièce, en une pièce de matériau ou intégralement avec la section d'enceinte (100) et, dans la position de soulagement de traction (II), la tige d'enroulement (200) et la section d'enceinte (100) sont formées séparément l'une de l'autre, dans lequel la tige d'enroulement (200) est reçue dans l'évidement (112) de la section d'enceinte (100).

8. Agencement de soulagement de traction (20) selon l'une des revendications précédentes, **caractérisé en ce que**, dans la position d'enroulement (I), la tige d'enroulement (200) est jointe à la section d'enceinte (100), en particulier à la paroi inférieure (110) de la section d'enceinte (100), de préférence par l'intermédiaire d'au moins une connexion de film (190) qui se casse lorsque la tige d'enroulement (200) est amenée depuis la position d'enroulement position (I) dans la position de soulagement de traction (II).

9. Agencement de soulagement de traction (20) selon l'une des revendications précédentes, **caractérisé en ce que** deux, de préférence trois ou plus de trois connexions de film (190) sont formées entre la section d'enceinte (100) et la tige d'enroulement (200), et
les connexions de film (190) sont agencées d'une manière telle que les connexions de film (190) maintiennent la tige d'enroulement (200) dans une position verticale également pendant l'enroulement de la bobine du dispositif électrique, électronique ou électro-optique (1).

10. Agencement de soulagement de traction (20) selon l'une des revendications précédentes, **caractérisé en ce que**, dans la position de soulagement de traction (II) de la tige d'enroulement (200), une section de la tige d'enroulement (200), en particulier au moins une section de la partie de base (210), est reçue dans l'évidement (112) de la section d'enceinte (100) d'une manière à complémentarité de forme.

11. Agencement de soulagement de traction (20) selon l'une des revendications précédentes, **caractérisé en ce que**, dans la position de soulagement de traction (II) de la tige d'enroulement (200), une section de la tige d'enroulement (200), en particulier au moins une section de la partie de base (210), s'agence dans l'évidement (112) de la section d'enceinte (100) d'une manière étanche, dans lequel la tige d'enroulement (200), en particulier la partie de base (210), est de préférence surdimensionnée par rapport à l'évidement (112).

12. Agencement de soulagement de traction (20) selon l'une des revendications précédentes, **caractérisé en ce que** la tige d'enroulement (200), la partie de base (210) ou une section de la partie de base (210) est alignée avec une extension longitudinale de l'évidement (112) de la section d'enceinte (100), dans lequel la tige d'enroulement (200), la partie de base (210) ou la section de la partie de base (210) est rétractable de façon translationnelle dans l'évidement (112).

13. Enceinte (10), boîtier (10), cadre (10) ou structure (10) d'un dispositif électrique, électronique ou électro-optique (1), en particulier un capteur (1), un détecteur (1) ou un moteur électrique (1),
**caractérisé en ce que** l'enceinte (10), le boîtier (10), le cadre (10) ou la structure (10) comprend un agencement de soulagement de traction (20) selon l'une des revendications précédentes.

14. Procédé de réalisation d'un soulagement de traction pour un conducteur électrique (30), en particulier un fil électrique verni (30) d'une bobine, d'un dispositif électrique, électronique ou électro-optique (1),
dans lequel le conducteur (30) est au moins partiellement enroulé autour d'une tige d'enroulement mobile (200) d'une section d'enceinte (100) du dispositif électrique, électronique ou électro-optique (1),
**caractérisé en ce que** la tige d'enroulement (200) est ultérieurement rétractée dans un évidement (112) dans la section d'enceinte (100), réduisant de ce fait une tension mécanique dans le conducteur (30), la section d'enceinte (100) étant ensuite au moins partiellement recouverte avec un composé d'enrobage.

15. Procédé de production d'un dispositif électrique, électronique ou électro-optique (1), en particulier un capteur (1), un détecteur (1) ou un moteur électrique (1),
**caractérisé en ce que** le procédé comprend les étapes consistant à enrouler une bobine du dispositif électrique, électronique ou électro-optique (1) avec un conducteur électrique (30), et à réaliser un soulagement de traction pour le conducteur (30) selon la revendication précédente.
